# EUROPÄISCHE PATENTSCHRIFT

(11) **EP 3 132 317 B1**
(45) Veröffentlichungstag und Bekanntmachung des Hinweises auf die Patenterteilung: **31.03.2021**
(21) Anmeldenummer: 15723180.4
(22) Anmeldetag: 05.05.2015
(51) Int. Cl.: G05B 13/04

(54) **VERFAHREN ZUR RECHNERGESTÜTZTEN ANLAGENSTEUERUNGSOPTIMIERUNG MITTELS EINEM SIMULATIONSMODUL**
METHOD FOR COMPUTER-AIDED PLANT CONTROL OPTIMISATION USING A SIMULATION MODULE
PROCÉDÉ PERMETTANT L'OPTIMISATION ASSISTÉE PAR ORDINATEUR DE LA COMMANDE D'UNE INSTALLATION AU MOYEN D'UN MODULE DE SIMULATION

(30) Priorität: 01.07.2014 DE 102014212747
(43) Veröffentlichungstag der Anmeldung: 22.02.2017
(73) Patentinhaber: Siemens Energy Global GmbH & Co. KG, 81739 München (DE)
(72) Erfinder: DÜLL, Siegmund, 80336 München (DE); HENTSCHEL, Alexander, 81929 München (DE); STERZING, Volkmar, 85579 Neubiberg (DE); UDLUFT, Steffen, 82223 Eichenau (DE); SINGH, Jatinder P., Charlotte, NC 28277 (US)
(86) Internationale Anmeldenummer: PCT/EP2015/059844
(87) Internationale Veröffentlichungsnummer: WO 2016/000851

(56) Entgegenhaltungen:
- EP-A1- 1 214 631
- EP-A1- 1 217 473
- EP-A1- 1 316 866
- EP-A2- 0 370 327

## Beschreibung

Bei der Steuerung komplexer dynamischer Systeme, wie z.B. Gasturbinen, Windturbinen oder anderen technischen Anlagen oder Systemen, ist es in der Regel wünschenswert, das Systemverhalten hinsichtlich vorgegebener Kriterien zu optimieren. So wird beispielsweise bei Gasturbinen in der Regel angestrebt, Wirkungsgrad, Effizienz und/oder Verbrennungsdynamik zu verbessern, sowie Abgasemissionen, Brennkammerbrummen und/oder Verschleiß zu verringern.

Ein komplexes dynamisches System weist üblicherweise eine Vielzahl interagierender Steuerungsparameter auf. Zur Steuerung des dynamischen Systems steht einer Systemsteuerung demnach eine Vielzahl möglicher Steueraktionen zur Verfügung, die das Systemverhalten beeinflussen. Verschiedene Steueraktionen können dabei auf sehr komplexe Weise, insbesondere auch gegenläufig wechselwirken. So kann eine Steueraktion, die einen positiven Effekt auf ein erstes Steuerungskriterium hat, sich auf ein zweites Steuerungskriterium negativ auswirken. Zudem kann sich die gleiche Steueraktion abhängig vom Systemzustand positiv oder negativ auswirken.

Aus dem Stand der Technik sind rechnergestützte Steuerungen oder Regler bekannt, die spezifisch darauf abgestimmt sind, vorgegebene Steuerungskriterien einzuhalten oder zu optimieren. Derartige Steuerungskriterien unterscheiden sich jedoch in der Regel je nach Einsatzsituation eines dynamischen Systems. So können z.B. für ein Kraftwerk in verschiedenen Ländern unterschiedliche Grenzwerte für die Abgasemissionen vorgeschrieben sein. Während in einem ersten Land geringe Abgasemissionen Priorität gegenüber anderen Steuerungskriterien haben mögen, können in einem zweiten Land ein geringer Verschleiß und geringe Wartungskosten Priorität haben. In der Regel sind eine Vielzahl von sich gegenseitig beeinflussenden Steuerungskriterien in geeigneter Weise zu gewichten, um eine für die vorliegende Situation optimale Steuerung zu erreichen.

Zur Optimierung vorgegebener Steuerungskriterien verwenden zeitgemäße Steuerungen häufig Techniken des maschinellen Lernens. So kann z.B. ein neuronales Netzwerk darauf trainiert werden, die Steuerung eines dynamischen Systems hinsichtlich eines oder mehrerer vorgegebener Steuerungskriterien zu optimieren. Allerdings ist ein Training eines neuronalen Netzwerks in der Regel verhältnismäßig zeitaufwendig. Ändert sich ein Steuerungskriterium, so dauert es häufig verhältnismäßig lange bis sich ein lernendes neuronales Netzwerk auf das geänderte Steuerungskriterium einstellt. Es ist daher häufig sehr zeitaufwendig, geeignete Steuerungskriterien für einen angestrebten Zweck oder eine neue Situation zu optimieren.

Das Dokument EP 1 316 866 A1 offenbart ein Verfahren zum Optimieren von Kraftwerken, in welchem eine Kostenfunktion minimiert wird, die eine Abweichung einer Kraftwerkbauteillebensdauer von einer Nennlebensdauer beschreibt. Dazu werden zu einem bestimmten Zeitpunkt zukünftige Eingangswerte, wie zum Beispiel Steuerungswerte oder Prozesswerte bestimmt, und das Kraftwerk wird mit einem Simulationsmodul bis zu einem bestimmten zukünftigen Zeitpunkt simuliert. Das Dokument EP 1 217 473 A1 offenbart ein ähnliches Verfahren zum Optimieren von Kraftwerken.

Ferner offenbart das Dokument EP 1 214 631 A1 ein Verfahren zur Simulation eines technischen Systems, bei dem eine Zielfunktion von Parametern und vorgegebenen Einstellungskonstanten abhängt. Abhängig von einer vorgegebenen Belegung der Parameter wird anhand einer Anfrage an eine externe Quelle ein Ergebnis in Form eines Einflusses der Parameter auf das technische System bestimmt. Anhand des Ergebnisses und der Einstellkonstanten wird das technische System simuliert.

Das Dokument EP 0 370 327 A2 offenbart einen Optimierer für ein parameterabhängiges Netzwerksystem bestehend aus einer Mehrzahl von Reglern, die zur Kommunikation festgestellter Eingangswerte durch ein Netzwerk miteinander verbunden sind und Steuerungswerte für ein gesteuertes System erstellen.

Es ist Aufgabe der vorliegenden Erfindung eine Vorrichtung und ein Verfahren zur rechnergestützten Steuerungsoptimierung für ein technisches System zu schaffen, die eine flexiblere und schnellere Optimierung von Steuerungskriterien erlauben.

Gelöst wird diese Aufgabe durch ein interaktives Assistenzsystem mit den Merkmalen des Patentanspruchs 1, durch ein Verfahren mit den Merkmalen des Patentanspruchs 8 sowie durch ein Computerprogrammprodukt mit den Merkmalen des Patentanspruchs 12.

Erfindungsgemäß sind zur rechnergestützten Steuerungsoptimierung für ein technisches System ein interaktives Assistenzsystem sowie ein entsprechendes Verfahren vorgesehen. Das technische System kann z.B. eine Gasturbine, eine Windturbine, ein Kraftwerk oder eine andere technische Anlage oder ein anderes technisches System sein. Ein Eingabeterminal dient zum Einlesen mindestens eines Zustandsparameters, der einen ersten Systemzustand des technischen Systems angibt, sowie zum Einlesen mindestens eines Einstellparameters zum Einrichten einer zum Training eines neuronalen Netzwerks geeigneten Belohnungsfunktion. Eine derartige Belohnungsfunktion wird häufig auch als Reward-Function bezeichnet. Ein Simulationsmodul dient zum Simulieren einer Durchführung einer vom ersten Systemzustand ausgehenden Aktionssequenz am technischen System sowie zur Prädiktion daraus resultierender Folgezustände des technischen Systems. Weiterhin ist ein mit dem Eingabeterminal und dem Simulationsmodul gekoppeltes Optimierungsmodul vorgesehen. Das Optimierungsmodul dient zum Einrichten der Belohnungsfunktion anhand des Einstellparameters, zum Generieren einer Vielzahl von Aktionssequenzen für den ersten Systemzustand, zum Übermitteln der Aktionssequenzen an das Simulationsmodul sowie zum Empfangen der daraus resultierenden Folgezustände. Darüber hinaus dient das Optimierungsmodul zum Bestimmen von für die resultierenden Folgezustände zu erwartenden Belohnungen mittels der eingerichteten Belohnungsfunktion sowie zum Ermitteln einer belohnungsoptimierenden Aktionssequenz. Zur Ausgabe eines aus der belohnungsoptimierenden Aktionssequenz resultierenden Systemzustands ist ein Ausgabeterminal vorgesehen.

Die Erfindung erlaubt eine schnelle interaktive Optimierung bzw. Verbesserung von Steuerungskriterien für ein technisches System für eine jeweils vorgegebene Situation und/oder für einen jeweils angestrebten Zweck. Die Steuerungskriterien können durch geeignetes Einrichten der zum Training für ein neuronales Netzwerk geeigneten Belohnungsfunktion in flexibler Weise durch einen Benutzer am Eingabeterminal modifiziert werden. Auswirkungen dieser Modifikationen können durch den Benutzer am Ausgabeterminal direkt erfasst werden. Abhängig davon kann der Benutzer dann weitere Anpassungen der Belohnungsfunktion bzw. der Steuerungskriterien vornehmen und so die Belohnungsfunktion bzw. die Steuerungskriterien sukzessive interaktiv optimieren. Die Verwendung einer Belohnungsfunktion zur Optimierung von Steuerungskriterien ist insofern vorteilhaft, als die Belohnungsfunktion nach ihrer interaktiven Optimierung direkt zum Training einer auf einem neuronalen Netz basierenden Steuerung des technischen Systems genutzt werden kann.

Der Einsatz des Simulationsmoduls erlaubt es, von Aktionssequenzen bewirkte Folgezustände des technischen Systems zeit- und kostengünstig zu bestimmen. Dies gilt insbesondere auch für solche Aktionssequenzen, die am realen technischen System nur mit großem Aufwand durchzuführen wären. Darüber hinaus kann das Simulationsmodul - ausreichende Rechenleistung vorausgesetzt - die Folgezustände häufig schneller als das reale technische System bereitstellen und so den Optimierungsprozess verkürzen.

Vorteilhafte Ausführungsformen und Weiterbildungen der Erfindung sind in den abhängigen Ansprüchen angegeben.

Nach einer vorteilhaften Ausführungsform der Erfindung kann das Optimierungsmodul zur Optimierung von kontinuierliche Stellgrößen umfassenden Aktionssequenzen eingerichtet sein. Derartige kontinuierliche Stellgrößen, wie z.B. eine Gaszufuhr bei einer Gasturbine, sind in vielen technischen Systemen steuerbar.

Ferner kann im Optimierungsmodul ein stochastisches und/oder nicht-konvexes Optimierungsverfahren zur Ermittlung der belohnungsoptimierenden Aktionssequenz implementiert sein. Stochastische Optimierungsverfahren sind auch auf hochdimensionale und/oder nichtlineare Optimierungsprobleme erfolgreich anwendbar. Nicht-konvexe Optimierungsverfahren sind vorteilhaft, falls verschiedene Optimierungsparameter voneinander abhängig sind.

Vorzugsweise kann als Optimierungsverfahren eine Partikelschwarmoptimierung, ein genetisches Optimierungsverfahren, ein Simulated-Annealing-Verfahren und/oder ein stochastisches Gradientenverfahren implementiert sein.

Weiterhin kann das Simulationsmodul zur Verarbeitung von Sensordaten des technischen Systems eingerichtet sein. Ein solcherart eingerichtetes Simulationsmodul kann auch am realen technischen System mit realen Sensordaten betrieben und hinsichtlich seiner Simulationstreue optimiert werden.

Ferner kann im Simulationsmodul ein neuronales Netzwerk, eine Support-Vector-Machine, ein Gaußprozess-Modell und/oder ein physikalisches Modell zur Simulation des technischen Systems implementiert sein.

Nach einer vorteilhaften Ausführungsform kann das neuronale Netzwerk als rekurrentes neuronales Netzwerk implementiert sein. Ein solches rekurrentes neuronales Netzwerk erlaubt es, zeitabhängige Muster auf effiziente Weise zu erkennen.

Das neuronale Netzwerk ist bereits für das technische System vortrainiert

Nach einer weiteren Ausführungsform kann die belohnungsoptimierende Aktionssequenz am Ausgabeterminal ausgegeben werden.

Vorzugsweise kann ein zeitlicher Verlauf des resultierenden Systemzustandes, der belohnungsoptimierenden Aktionssequenz und/oder eines Rückgabewertes der Belohnungsfunktion am Ausgabeterminal ausgegeben werden. Dies erlaubt eine rasche Beurteilung des Optimierungserfolgs durch den Benutzer.

Insbesondere kann der Benutzer direkt vergleichen, inwieweit ein hinsichtlich eines aktuell eingestellten Steuerkriteriums optimales Systemverhalten einem vom Benutzer gewünschten Systemverhalten entspricht.

Darüber hinaus können durch das Ausgabeterminal mehrere Varianten der Belohnungsfunktion und/oder des Zustandsparameters zur benutzerseitigen Auswahl am Eingabeterminal ausgegeben werden. Insbesondere kann eine nach einem vorgegebenen Kriterium erfolgende Vorauswahl aus möglichen Belohnungsfunktionen und/oder Zustandsparametern ausgegeben werden.

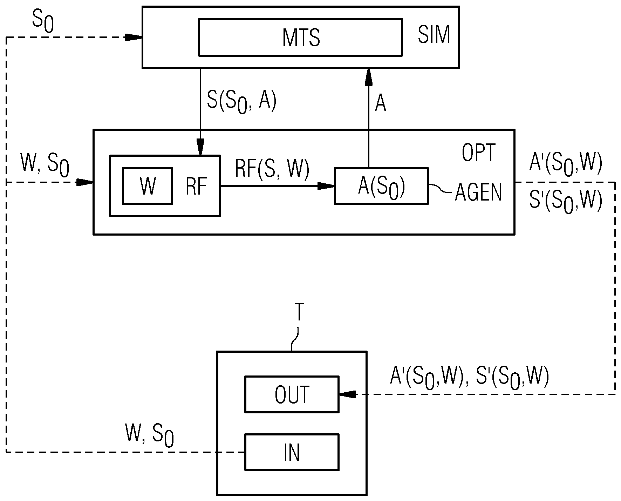

Ein Ausführungsbeispiel der Erfindung wird nachfolgend anhand der Zeichnung näher erläutert.

Die Figur zeigt in schematischer Darstellung ein interaktives Assistenzsystem gemäß der Erfindung.

In der Figur ist ein interaktives Assistenzsystem zur rechnergestützten Steuerungsoptimierung für ein dynamisches technisches System schematisch dargestellt. Das technische System kann beispielsweise eine Gasturbine, eine Windturbine, ein Kraftwerk, eine Fertigungsanlage oder eine andere technische Anlage oder ein anderes dynamisches System sein.

Das interaktive Assistenzsystem umfasst ein Terminal T mit einem Eingabeterminal IN, zum Beispiel einer Tastatur sowie mit einem Ausgabeterminal OUT, zum Beispiel einem Bildschirm.

Das Eingabeterminal IN dient zum Einlesen eines Zustandsparameters, der einen ersten Systemzustand S₀ des technischen Systems beschreibt. Der erste Systemzustand S₀ ist interaktiv von einem Benutzer des Terminals T vorgebbar und beschreibt einen Startzustand, von dem eine Simulation des technischen Systems ausgeht. Der erste Systemzustand S₀ wird dargestellt durch einen Vektor von Zustandsparametern des technischen Systems, einem sogenannten Zustandsvektor S₀= ((S₀)_{1,...} (S₀)_{N}), wobei N eine Anzahl von Zustandsparametern des technischen Systems angibt. Die Zustandsparameter beschreiben einen zu Beginn der Simulation vorliegenden Zustand des technischen Systems. Zustandsparameter können insbesondere physikalische Größen wie Temperatur, Druck oder Spannung sein oder z.B. bei einer Gasturbine ein Brennkammerbrummen oder eine Emission von Stickoxiden beschreiben. Der Benutzer kann die verschiedenen Zustandsparameter am interaktiven Eingabeterminal IN explizit eingeben oder auch aus am Ausgabeterminal OUT vorgeschlagenen Zustandsparametern oder Systemzuständen auswählen.

Der den ersten Systemzustand beschreibende Zustandsvektor S₀ wird vom Eingabeterminal IN zu einem Simulationsmodul SIM zur Simulation des dynamischen Verhaltens des technischen Systems übermittelt. Das Simulationsmodul SIM simuliert ausgehend vom ersten Systemzustand S₀ eine durch das dynamische Verhalten des technischen Systems aus S₀ folgende Zustandssequenz S, d.h. die aus S0 resultierenden Folgezustände. Die Zustandssequenz S = (S₁,...,S_{T}) =: (Sᵢ) ist eine Sequenz zeitlich aufeinanderfolgender Systemzustände Sᵢ des technischen Systems, wobei i=1,...,T verschiedene aufeinanderfolgende Zeitschritte bezeichnet und T die Anzahl der berücksichtigten Zeitschritte ist. Die Systemzustände Sᵢ werden jeweils durch einen Zustandsvektor des technischen Systems, d.h. durch einen Vektor von Zustandsparametern Sᵢ=((Sᵢ)₁,...(Sᵢ)_{N}) dargestellt, der den Zustand des technischen Systems im i-ten Zeitschritt beschreibt. Zusammengefasst wird die Zustandssequenz S also durch die Sequenz von Zustandsvektoren S=(Sᵢ)ₙ, i=1,...,T, n=1,...,N dargestellt.

Das Eingabeterminal IN dient weiterhin zum interaktiven Einlesen eines Einstellparameters W für eine Belohnungsfunktion RF. Im vorliegenden Ausführungsbeispiel wird als Einstellparameter W ein Vektor W=(W₁,...,W_{N}) der Länge N mit Gewichten Wᵢ für die N verschiedenen Zustandsparameter des technischen Systems eingelesen. Die interaktiv vom Benutzer vorgegebenen Einstellparameter W werden vom Eingabeterminal IN zu einem Optimierungsmodul OPT übermittelt. Das Optimierungsmodul OPT implementiert die Belohnungsfunktion RF und parametrisiert diese durch die Einstellparameter W. Eine derartige im Zusammenhang mit Optimierungsproblemen verwendete Belohnungsfunktion wird häufig auch als Reward Function bezeichnet. Eine solche Reward Function RF kann insbesondere auch zum Training eines neuronalen Netzes verwendet werden. Die Belohnungsfunktion RF ordnet einem jeweiligen Zustandsvektor Sᵢ des technischen Systems oder einer Sequenz von Zustandsvektoren S eine zu erwartende Belohnung gemäß dem durch den Einstellparameter W eingestellten Optimierungskriterium zu. Durch die Belohnungsfunktion RF wird ein spezifisches Optimierungskriterium oder Optimierungsziel für das technische System abgebildet. Das Optimierungsziel des Optimierungsmoduls OPT ist demnach eine Maximierung der vorzugsweise über mehrere Zeitschritte akkumulierten und mittels der Belohnungsfunktion RF bestimmten Belohnung. Durch interaktive Modifikation der Einstellparameter W kann der Benutzer die Belohnungsfunktion RF, das Optimierungsziel bzw. das Steuerungskriterium verändern und die Auswirkungen dieser Veränderung interaktiv beobachten und bewerten. Auf diese Weise kann der Benutzer das Optimierungsziel schnell an eine neue Situation oder an einen spezifischen Zweck anpassen. Dies erlaubt eine schnelle und flexible Optimierung von situationsadaptierten Steuerungskriterien.

Im vorliegenden Ausführungsbeispiel werden die Einstellparameter W durch einen Vektor mit Gewichten für die verschiedenen Zustandsparameter des technischen Systems dargestellt. Die Belohnungsfunktion RF kann damit zum Beispiel implementiert werden als RF=RF(Sᵢ,W)=W₁·(Sᵢ)₁+...+W_{N}·(Sᵢ)_{N}. Dies stellt eine Belohnung im i-ten Zeitschritt da. Beispielsweise kann hierbei (Sᵢ)₁ ein das Brennkammerbrummen beschreibender Zustandsparameter und (Sᵢ)₂ ein die Emission von Stickoxiden beschreibender Zustandsparameter sein. Alternativ oder zusätzlich kann die Belohnungsfunktion RF auch Zustandsparameter verschiedener Zeitschritte verknüpfen oder eine ganze Zustandssequenz. Alterativ oder zusätzlich zur Berechnung einer linearen Summe von gewichteten Zustandsparametern kann die Belohnungsfunktion RF auch nichtlinear durch spezifische Einstellparameter W parametrisiert werden.

Das Simulationsmodul SIM umfasst ein rekurrentes neuronales Netzwerk mit einem vortrainierten neuronalen Model MTS des technischen Systems. Das neuronale Model MTS ist zur Verarbeitung von Sensordaten des technischen Systems geeignet und kann so direkt von einem bestehenden technischen System übernommen oder für dieses weiterverwendet werden. Insbesondere werden dem Simulationsmodul SIM die den ersten Systemzustand S₀ beschreibenden Zustandsparameter als Sensordaten übermittelt. Alternativ oder zusätzlich zum rekurrenten neuronalen Netzwerk kann im Simulationsmodul SIM auch eine Support-Vector-Machine, ein Gaußprozess-Modell und/oder ein physikalisches Modell zur Simulation des technischen Systems implementiert sein.

Durch das Simulationsmodul SIM wird das Durchführen einer vom ersten Zustand S₀ ausgehenden Aktionssequenz A für das technische System simuliert. Die Aktionssequenz A umfasst eine Sequenz von zeitlich aufeinanderfolgenden Aktionsvektoren Aᵢ, i=1,...,T, das heißt A=(A₁,...,A_{T}), wobei T (wie oben) die Anzahl der berücksichtigen Zeitschritte angibt. Ein Aktionsvektor Aᵢ beschreibt im i-ten Zeitschritt am technischen System vorzunehmende Steueraktionen. Als Steueraktion, oder kurz Aktion, wird eine spezifische Einstellung von Stellgrößen für das dynamische technische System bezeichnet. Als Beispiel für derartige Stellgrößen seien z.B. für eine Gasturbine Gaszufuhr, Verdichtung, Kühlung oder andere insbesondere kontinuierliche physikalische Stellgrößen genannt.

Eine Steueraktion Aᵢ führt das technische System vom Zustand Sᵢ₋₁ in den Zustand Sᵢ über. Die Steueraktion Aᵢ wird dargestellt durch einen Vektor mit M Komponenten, wobei M die Anzahl der Stellgrößen des technischen Systems angibt. Insgesamt wird die Aktionssequenz A also dargestellt durch A=(Aᵢ)ₘ, i=1,...,T, m=1,...,M.

Das Simulationsmodul SIM simuliert mittels des neuronalen Models MTS das dynamische Verhalten des technischen Systems ausgehend von ersten Systemzustand S₀ unter Einfluss einer Aktionssequenz A. Hierbei werden die aus A resultierenden Folgezustände S(S₀,A) = (S₁...,S_{T}) des technischen Systems prädiziert, das heißt vorhergesagt. Das rekurrente neuronale Netzwerk des Simulationsmoduls SIM wird hierbei vorzugsweise nur zur Simulation des dynamischen Verhaltens des technischen Systems genutzt und während der Simulation nicht trainiert. Der rekurrenten neuronalen Simulation durch das Simulationsmodul SIM wird als Eingangsgröße unter Anderem die durchzuführende Aktionssequenz A zugeführt, so dass die Simulation als solche im Wesentlichen unabhängig vom Steuerungskriterium bzw. von der Belohnungsfunktion RF erfolgen kann. Im Unterschied zur neuronalen Simulation sollte beim Training einer neuronalen Steuerung eine belohnungsoptimierende Aktionssequenz durch die neuronale Steuerung selbst bestimmt werden. Die neuronale Steuerung müsste also das Steuerungskriterium bzw. die Belohnungsfunktion RF explizit berücksichtigen, während die neuronale Simulation lediglich Auswirkungen einer Aktionssequenz auf das Systemverhalten prädiziert. Da ein Training eines neuronalen Netzwerkes relativ zeitaufwändig ist, kann eine neuronale Steuerung nur langsam auf Änderungen der Belohnungsfunktion RF reagieren. Im Unterschied dazu ist die durch das Simulationsmodul SIM erfolgende neuronale Simulation als solche im Wesentlichen unabhängig von der Belohnungsfunktion RF und kann somit bereits vortrainiert werden, z.B. anhand des realen technischen Systems.

Das Optimierungsmodul OPT ist mit dem Simulationsmodul SIM sowie mit dem Terminal T gekoppelt. Anhand der vom Terminal T empfangenen Einstellparameter W richtet das Optimierungsmodul OPT die Belohnungsfunktion RF als Funktion einer Zustandssequenz S ein gemäß RF = RF(S,W).

Das Optimierungsmodul OPT verfügt über einen Aktionsgenerator AGEN. Dieser generiert eine Vielzahl von vom ersten Systemzustand S₀ ausgehenden Aktionssequenzen A(S₀) im Rahmen eines Optimierungsverfahrens zur Maximierung einer akkumulierten Belohnung, die mittels der eingerichteten Belohnungsfunktion RF bestimmt wird. Als Optimierungsverfahren können stochastische Optimierungsverfahren und/oder insbesondere gradientenfreie Optimierungsheuristiken für nicht-konvexe Optimierungsprobleme verwendet werden, wie zum Beispiel eine Partikelschwarmoptimierung, ein genetisches Optimierungsverfahren, ein Simulated-Annealing-Verfahren und/oder ein stochastisches Gradientenverfahren. Jeder der generierten Aktionssequenzen A(S₀) wird zum Simulationsmodul SIM übermittelt. Dort werden die daraus jeweils resultierenden Folgezustände S(S₀,A) prädiziert und zum Optimierungsmodul OPT übermittelt. Für einen jeweiligen Folgezustand S wird eine gemäß dem aktuell eingestellten Optimierungskriterium zu erwartende Belohnung RF(S,W) bestimmt und zum Aktionsgenerator AGEN übermittelt. Abhängig von der zur erwartenden Belohnung werden gemäß dem implementierten Optimierungsverfahren neue Aktionssequenzen A(S₀) generiert, die eine höhere Belohnung erwarten lassen. Diese neuen Aktionssequenzen A(S₀) werden wiederum zum Simulationsmodul SIM übermittelt, um abhängig vom Simulationsergebnis wieder die hierfür zu erwartete Belohnung zu ermitteln. Auf dieser Weise optimiert das Optimierungsmodul OPT basierend auf der Simulation des Simulationsmoduls SIM vom ersten Systemzustand S₀ ausgehende Aktionssequenzen A der Länge T. Eine jeweilige generierte Aktionssequenz repräsentiert hierbei einen Vorschlag, das technische System in den nächsten T Zeitschritten zu steuern. Für komplexe technische Systeme wie zum Beispiel Gasturbinen sind in der Regel Aktionssequenzen mit einer Vielzahl von Zeitschritten erforderlich, um auch langfristige dynamische Effekte abzubilden. Dies führt in der Regel zu hochdimensionalen Optimierungsproblemen, für die insbesondere die oben genannten stochastischen Verfahren besonders geeignet sind.

Nach mehreren sukzessiven Optimierungsrunden wird eine im Sinne der aktuell eingestellten Belohnungsfunktion RF belohnungsoptimierende Aktionssequenz A' ermittelt. Die belohnungsoptimierende Aktionssequenz A' umfasst (wie andere Aktionssequenzen A) eine Sequenz von Vektoren von Stellgrößen, d.h. A'=(A'ᵢ)ₘ, i=1,...,T, m=1,...,M. Die belohnungsoptimierende Aktionssequenz A' kann als Funktion des ersten Systemzustandes S₀ und der Einstellparameter W aufgefasst werden: A' (S₀,W) . Unterschiedliche Wahlen des ersten Systemzustandes S₀ und der Einstellparameter W erlauben mithin voneinander unabhängige Optimierungen von belohnungsoptimierenden Aktionssequenzen A' durch das Optimierungsmodul OPT.

Ausgehend vom ersten Systemzustand S₀ wird durch das Simulationsmodul SIM eine aus der belohnungsoptimierenden Aktionssequenz A' resultierende Zustandssequenz S'=(S'ᵢ)ₙ , i=1,...,T und n=1,...,N ermittelt. Die resultierende Zustandssequenz S' entspricht dem vom Simulationsmodul SIM vorhergesagten Systemverhalten bei Einwirkung der belohnungsoptimierenden Aktionssequenz A'. Die belohnungsoptimierende Aktionssequenz A'(S₀,W), sowie die daraus resultierende Zustandssequenz S'(S₀,W) werden anschließend vom Optimierungsmodul OPT zum Terminal T übertragen. Vorzugsweise können auch die Rückgabewerte der Belohnungsfunktion RF(S'ᵢ,W), i=1,...,T oder andere aus A' und/oder S' abgeleitete Größen zum Terminal T übertragen werden. Durch das Ausgabeterminal OUT können dann belohnungsoptimierende Aktionsvektoren A'ᵢ, resultierende Zustandsvektoren S'ᵢ und/oder zugehörige Belohnungswerte RF(S'ᵢ,W) im zeitlichen Verlauf i=1,...,T dargestellt werden. Dies erlaubt eine rasche Beurteilung des Optimierungserfolgs durch den Benutzer. Abhängig davon kann der Benutzer dann weitere Anpassungen der Belohnungsfunktion RF beziehungsweise der Steuerungskriterien sowie des Startzustands S₀ interaktiv am Terminal T vornehmen.

Die vom Optimierungsmodul OPT verwendeten Optimierungsverfahren konvergieren in der Regel erheblich schneller als ein Training eines neuronalen Netzwerks. Wie oben schon erwähnt ist das rekurrente neuronale Netzwerk des Simulationsmoduls SIM im Wesentlichen unabhängig von der Belohnungsfunktion RF und muss bei deren Änderung nicht nachtrainiert werden. Zur Simulation des technischen Systems wird das rekurrente neuronale Netzwerk lediglich ausgewertet. Eine solche Auswertung wird häufig auch als Recall bezeichnet und ist sehr effizient und performant. Somit erlaubt die logische Trennung der mittels eines rekurrenten neuronalen Netzwerks implementierten Simulation von der auf schnellen stochastischen Optimierungsverfahren basierenden Optimierung eine besonders performante und effiziente Bestimmung der belohnungsoptimierenden Aktionssequenz A' für das simulierte technische System.

Somit sind für einen Benutzer nach Eingabe eines neuen ersten Systemzustandes S₀ und Einstellung einer neuen Belohnungsfunktion RF deren Auswirkungen schon nach kurzer Zeit erkennbar, sodass eine Anpassung oder Optimierung der Belohnungsfunktion durch Abwägung verschiedener Optimierungsziele durch den Benutzer interaktiv am Terminal T vorgenommen werden kann. Auf diese Weise erlaubt das interaktive Assistenzsystem eine schnelle interaktive Optimierung der Belohnungsfunktion beziehungsweise der Steuerungskriterien hinsichtlich des gewünschten Systemverhaltens.

Insbesondere kann das interaktive Assistenzsystem den Benutzer dabei unterstützen, auf effiziente Weise einen optimalen Arbeitspunkt im hochdimensionalen Aktionsraum des technischen Systems zu finden. Der Benutzer kann dabei kurzfristig verschiedene Steuerungskriterien testen und vergleichen und so eine Belohnungsfunktion erstellen, die für ein technisches System in einer vorgegebenen Situation optimal ist. Darüber hinaus kann das interaktive Assistenzsystem dazu benutzt werden, andere Steuerungen für das technische System zu bewerten, indem eine Referenz für die Performanz der anderen Steuerungen bereitgestellt wird.

## Patentansprüche

1. Interaktives Assistenzsystem zur rechnergestützten Steuerungsoptimierung für ein technisches System, mit
a) einem Eingabeterminal (IN) zum interaktiven Einlesen mindestens eines Zustandsparameters, der einen ersten Systemzustand (S₀) des technischen Systems angibt, sowie mindestens eines Einstellparameters (W) zum Einrichten einer zum Training eines neuronalen Netzwerks geeigneten Belohnungsfunktion (RF),
b) einem Simulationsmodul (SIM) zum Simulieren einer Durchführung einer vom ersten Systemzustand (S₀) ausgehenden Aktionssequenz (A) am technischen System sowie zur Prädiktion daraus resultierender Folgezustände (S) des technischen Systems, wobei der Zustandsparameter zum Simulationsmodul (SIM) übermittelt wird und im Simulationsmodul (SIM) ein für das technische System vortrainiertes neuronales Netzwerk zur Simulation des technischen Systems implementiert ist,
c) einem mit dem Eingabeterminal (IN) und dem Simulationsmodul (SIM) gekoppelten Optimierungsmodul (OPT)
i) zum Einrichten der Belohnungsfunktion (RF) anhand des Einstellparameters (W),
ii) zum Generieren einer Vielzahl von Aktionssequenzen (A) für den ersten Systemzustand (S₀),
iii) zum Übermitteln der Aktionssequenzen (A) an das Simulationsmodul (SIM) und zum Empfangen der daraus resultierenden Folgezustände (S),
iv) zum Bestimmen von für die resultierenden Folgezustände (S) zu erwartenden Belohnungen mittels der eingerichteten Belohnungsfunktion (RF), und
v) zum Ermitteln einer belohnungsoptimierenden Aktionssequenz (A'), wobei die Optimierung von der neuronalen Simulation logisch getrennt ist, sowie
d) einem Ausgabeterminal (OUT) zur Ausgabe eines aus der belohnungsoptimierenden Aktionssequenz (A') resultierenden Systemzustands (S')

2. Interaktives Assistenzsystem nach Anspruch 1, **dadurch gekennzeichnet,**
**dass** das Optimierungsmodul (OPT) zur Optimierung von kontinuierliche Stellgrößen umfassenden Aktionssequenzen (A) eingerichtet ist.

3. Interaktives Assistenzsystem nach einem der vorhergehenden Ansprüche, **dadurch gekennzeichnet,**
**dass** im Optimierungsmodul (OPT) ein stochastisches und/oder nicht-konvexes Optimierungsverfahren zur Ermittlung der belohnungsoptimierenden Aktionssequenz (A') implementiert ist.

4. Interaktives Assistenzsystem nach Anspruch 3, **dadurch gekennzeichnet,**
**dass** als Optimierungsverfahren eine Partikelschwarmoptimierung, ein genetisches Optimierungsverfahren, ein Simulated-Annealing-Verfahren und/oder ein stochastisches Gradientenverfahren implementiert ist.

5. Interaktives Assistenzsystem nach einem der vorhergehenden Ansprüche, **dadurch gekennzeichnet,**
**dass** das Simulationsmodul (SIM) zur Verarbeitung von Sensordaten des technischen Systems eingerichtet ist.

6. Interaktives Assistenzsystem nach einem der vorhergehenden Ansprüche, **dadurch gekennzeichnet,**
**dass** im Simulationsmodul (SIM) ferner eine Support-Vector-Machine, ein Gaußprozess-Modell und/oder ein physikalisches Modell zur Simulation des technischen Systems implementiert ist.

7. Interaktives Assistenzsystem nach Anspruch 6, **dadurch gekennzeichnet,**
**dass** das neuronale Netzwerk als rekurrentes neuronales Netzwerk implementiert ist.

8. Verfahren zur interaktiven, rechnergestützten Steuerungsoptimierung für ein technisches System, wobei
a) durch ein Eingabeterminal (IN) mindestens ein Zustandsparameter, der einen ersten Systemzustand (S₀) des technischen Systems angibt, sowie mindestens ein Einstellparameter (W) zum Einrichten einer zum Training eines neuronalen Netzwerks geeigneten Belohnungsfunktion (RF) interaktiv eingelesen werden,
b) der Zustandsparameter und der Einstellparameter (W) zu einem Optimierungsmodul (OPT) übermittelt werden, das die Belohnungsfunktion (RF) anhand des Einstellparameters (W) einrichtet, und der Zustandsparameter zum einem Simulationsmodul (SIM) übermittelt wird,
c) durch das Optimierungsmodul (OPT) für den ersten Systemzustand (S₀) eine Vielzahl von Aktionssequenzen (A) generiert und zum Simulationsmodul (SIM) übermittelt wird,
d) durch das Simulationsmodul (SIM) jeweils ausgehend vom ersten Systemzustand (S₀) eine Durchführung der übermittelten Aktionssequenzen (A) am technischen System simuliert wird und daraus resultierende Folgezustände (S) des technischen Systems prädiziert werden, wobei die Simulation des technischen Systems anhand eines im Simulationsmodul (SIM) implementierten, für das technische System vortrainierten neuronalen Netzwerks erfolgt,
e) die Folgezustände (S) an das Optimierungsmodul (OPT) übermittelt werden,
f) durch das Optimierungsmodul (OPT) für die Folgezustände (S) zu erwartende Belohnungen mittels der eingerichteten Belohnungsfunktion (RF) bestimmt werden sowie eine belohnungsoptimierende Aktionssequenz (A') ermittelt wird, wobei die Optimierung von der neuronalen Simulation logisch getrennt ist, und
g) ein aus der belohnungsoptimierenden Aktionssequenz (A') resultierender Systemzustand (S') durch ein Ausgabeterminal (OUT) ausgegeben wird.

9. Verfahren nach Anspruch 8, **dadurch gekennzeichnet,**
**dass** die belohnungsoptimierende Aktionssequenz (A') am Ausgabeterminal (OUT) ausgegeben wird.

10. Verfahren nach Anspruch 9, **dadurch gekennzeichnet,**
**dass** ein zeitlicher Verlauf des resultierenden Systemzustandes (S'), der belohnungsoptimierenden Aktionssequenz (A') und/oder eines Rückgabewertes der Belohnungsfunktion (RF) am Ausgabeterminal (OUT) ausgegeben wird.

11. Verfahren nach einem der Ansprüche 8 bis 10, **dadurch gekennzeichnet,**
**dass** durch das Ausgabeterminal (OUT) mehrere Varianten der Belohnungsfunktion (RF) und/oder des Zustandsparameters zur benutzerseitigen Auswahl am Eingabeterminal (IN) ausgegeben werden.

12. Computerprogrammprodukt zur rechnergestützten Steuerungsoptimierung für ein technisches System, eingerichtet zum Ausführen eines Verfahrens nach einem der Ansprüche 8 bis 11 durch einen Computer.

## Claims

1. Interactive assistance system for computer-aided control optimization for a technical system, having
a) an input terminal (IN) for interactively reading in at least one state parameter, which indicates a first system state (S₀) of the technical system, and at least one setting parameter (W) for setting up a reward function (RF) suitable for training a neural network,
b) a simulation module (SIM) for simulating performance of an action sequence (A) on the technical system starting from the first system state (S₀) and for predicting resulting successor states (S) of the technical system, wherein the state parameter is transmitted to the simulation module (SIM), and a neural network which is pretrained for the technical system and is intended to simulate the technical system is implemented in the simulation module (SIM),
c) an optimization module (OPT) which is coupled to the input terminal (IN) and to the simulation module (SIM) and is intended
i) to set up the reward function (RF) on the basis of the setting parameter (W),
ii) to generate a multiplicity of action sequences (A) for the first system state (S₀),
iii) to transmit the action sequences (A) to the simulation module (SIM) and to receive the resulting successor states (S),
iv) to determine rewards which can be expected for the resulting successor states (S) by means of the reward function (RF) which has been set up, and
v) to determine a reward-optimizing action sequence (A'), wherein the optimization is logically separate from the neural simulation, and
d) an output terminal (OUT) for outputting a system state (S') resulting from the reward-optimizing action sequence (A').

2. Interactive assistance system according to Claim 1, **characterized in that**
the optimization module (OPT) is set up to optimize action sequences (A) comprising continuous manipulated variables.

3. Interactive assistance system according to one of the preceding claims, **characterized in that**
a stochastic and/or non-convex optimization method for determining the reward-optimizing action sequence (A') is implemented in the optimization module (OPT).

4. Interactive assistance system according to Claim 3, **characterized in that**
particle swarm optimization, a genetic optimization method, a simulated annealing method and/or a stochastic gradient method is/are implemented as the optimization method.

5. Interactive assistance system according to one of the preceding claims, **characterized in that**
the simulation module (SIM) is set up to process sensor data relating to the technical system.

6. Interactive assistance system according to one of the preceding claims, **characterized in that**
a support vector machine, a Gaussian process model and/or a physical model for simulating the technical system is/are also implemented in the simulation module (SIM).

7. Interactive assistance system according to Claim 6, **characterized in that**
the neural network is implemented as a recurrent neural network.

8. Method for interactive computer-aided control optimization for a technical system, wherein
a) an input terminal (IN) interactively reads in at least one state parameter, which indicates a first system state (S₀) of the technical system, and at least one setting parameter (W) for setting up a reward function (RF) suitable for training a neural network,
b) the state parameter and the setting parameter (W) are transmitted to an optimization module (OPT) which sets up the reward function (RF) on the basis of the setting parameter (W), and the state parameter is transmitted to a simulation module (SIM),
c) the optimization module (OPT) generates a multiplicity of action sequences (A) for the first system state (S₀) and transmits them to the simulation module (SIM),
d) the simulation module (SIM) respectively simulates performance of the transmitted action sequences (A) on the technical system starting from the first system state (S₀) and predicts resulting successor states (S) of the technical system, wherein the technical system is simulated on the basis of a neural network which is pretrained for the technical system and is implemented in the simulation module (SIM),
e) the successor states (S) are transmitted to the optimization module (OPT),
f) the optimization module (OPT) determines rewards which can be expected for the successor states (S) by means of the reward function (RF) which has been set up and determines a reward-optimizing action sequence (A'), wherein the optimization is logically separate from the neural simulation, and
g) a system state (S') resulting from the reward-optimizing action sequence (A') is output by an output terminal (OUT).

9. Method according to Claim 8, **characterized in that**
the reward-optimizing action sequence (A') is output on the output terminal (OUT).

10. Method according to Claim 9, **characterized in that**
a temporal progression of the resulting system state (S'), the reward-optimizing action sequence (A') and/or a return value of the reward function (RF) is/are output on the output terminal (OUT).

11. Method according to one of Claims 8 to 10, **characterized in that**
the output terminal (OUT) outputs a plurality of variants of the reward function (RF) and/or of the state parameter for user selection on the input terminal (IN).

12. Computer program product for computer-aided control optimization for a technical system, set up to carry out a method according to one of claims 8 to 11 by means of a computer.

## Revendications

1. Système d'assistance interactif pour l'optimisation assistée par ordinateur de la commande d'un système technique, comprenant
a) un terminal (IN) de saisie pour la lecture interactive d'au moins un paramètre d'état, qui indique un premier état (S₀) de système du système technique, ainsi qu'au moins un paramètre (W) de réglage pour l'installation d'une fonction (RF) de rétribution appropriée à l'apprentissage d'un réseau neuronal,
b) un module (SIM) de simulation pour la simulation d'une mise en œuvre d'une séquence (A) d'action sur le système technique en partant du premier état (S₀) du système ainsi que pour la prédiction d'états (S) suivants, qui s'ensuivent, du système technique, le paramètre d'état étant transmis au module (SIM) de simulation et, dans le module (SIM) de simulation, un réseau neuronal, ayant subi un apprentissage préalable pour le système technique, étant mis en œuvre pour la simulation du système technique,
c) un module (OPT) d'optimisation, couplé au terminal (IN) de saisie et au module (SIM) de simulation
i) pour l'installation de la fonction (RF) de rétribution à l'aide du paramètre (W) de réglage,
ii) pour la création d'une pluralité de séquences (A) d'action pour le premier état (S₀) du système,
iii) pour la transmission des séquences (A) d'action au module (SIM) de simulation et pour la réception des états (S) suivants, qui s'ensuivent,
iv) pour la détermination de rétribution à escompter pour les états (S) suivants, qui s'ensuivent, au moyen de la fonction (RF) de rétribution installée, et
v) pour la détermination d'une séquence (A') d'action optimisant la rétribution, l'optimisation étant séparée logiquement de la simulation neuronale, ainsi que
d) un terminal (OUT) de sortie pour la sortie d'un état (S') du système résultant de la séquence (A') d'action optimisant la rétribution.

2. Système d'assistance interactive suivant la revendication 1, **caractérisé**
**en ce que** le module (OPT) d'optimisation est installé pour l'optimisation de séquences (A) d'action comprenant des grandeurs de réglage continues.

3. Système d'assistance interactive suivant l'une des revendications précédentes, **caractérisé**
**en ce que**, dans le module (OPT) d'optimisation un procédé d'optimisation stochastique et/ou non convexe est mis en jeu pour la détermination de la séquence (A') d'action optimisant la rétribution.

4. Système d'assistance interactive suivant la revendication 3, **caractérisé**
**en ce que** comme procédé d'optimisation est mise en œuvre une optimisation par essaim particulaire, un procédé d'optimisation génétique, un procédé Simulated-Annealing et/ou un procédé par gradient stochastique.

5. Système d'assistance interactive suivant l'une des revendications précédentes, **caractérisé**
**en ce que** le module (SIM) de simulation est installé pour le traitement de données de capteur du système technique.

6. Système d'assistance interactive suivant l'une des revendications précédentes, **caractérisé**
**en ce que** dans le module (SIM) de simulation est mise en œuvre en outre une machine support-vector un modèle de processus gaussien et/ou un modèle physique de simulation du système technique.

7. Système d'assistance interactive suivant la revendication 6, **caractérisé**
**en ce que** le réseau neuronal est mis en œuvre sous la forme d'un réseau neuronal récurent.

8. Procédé d'optimisation interactif et assisté par ordinateur de la commande d'un système technique, dans lequel
a) par un terminal (IN) d'acquisition, on lit interactivement au moins un paramètre d'état, qui indique un premier état (S₀) de système du système technique, ainsi qu'au moins un paramètre (W) de réglage pour l'installation d'une fonction (RF) de rétribution appropriée à l'apprentissage d'un réseau neuronal,
b) on transmet le paramètre d'état et le paramètre (W) de réglage à un module (OPT) d'optimisation, qui installe la fonction (RF) de rétribution à l'aide du paramètre (W) de réglage et transmet le paramètre d'état à un module (SIM) de simulation,
c) par le module (OPT) d'optimisation du premier état (S₀) du système, on crée une pluralité de séquences (A) d'action et on la transmet au module (SIM) de simulation,
d) par le module (SIM) de simulation, on simule au système technique respectivement, en partant du premier état (S₀) du système, une mise en œuvre des séquences (A) d'action transmises et on prédit des états (S) suivants, qui s'ensuivent, du système technique, la simulation du système technique s'effectuant à l'aide d'un réseau neuronal mis en œuvre dans le module (SIM) de simulation et ayant subi un apprentissage préalable pour le système technique,
e) on transmet les états (S) suivants au module (OPT) d'optimisation,
f) par le module (OPT) d'optimisation, on détermine des rétributions à escompter pour les états (S) suivants au moyen de la fonction (RF) de rétribution installée ainsi que l'on détermine une séquence (A') d'action optimisant la rétribution, l'optimisation étant séparée logiquement de la simulation neuronale, et
g) on sort par un terminal (OUT) de sortie un état (S') du système provenant de la séquence (A') d'action optimisant la rétribution.

9. Procédé suivant la revendication 8,
**caractérisé,**
**en ce qu'**on sort au terminal (OUT) de sortie la séquence (A') d'action optimisant la rétribution.

10. Procédé suivant la revendication 9,
**caractérisé,**
**en ce qu'**on sort au terminal (OUT) de sortie une courbe en fonction de temps de l'état (S') du système qui s'ensuit, la séquence (A') d'action optimisant la rétribution et/ou une valeur de restitution de la fonction (RF) de rétribution.

11. Procédé suivant l'une des revendications 8 à 10,
**caractérisé,**
**en ce que** l'on sort par le terminal (OUT) de sortie plusieurs variantes de la fonction (RF) de rétribution et/ou du paramètre d'état pour le choix par l'utilisateur au terminal (IN) d'entrée.

12. Produit de programme d'ordinateur pour l'optimisation de la commande assistée par ordinateur d'un système technique, installé pour la mise en œuvre d'un procédé suivant l'une des revendications 8 à 11 par un ordinateur.
